# EUROPÄISCHE PATENTSCHRIFT

(11) **EP 1 924 383 B1**
(45) Veröffentlichungstag und Bekanntmachung des Hinweises auf die Patenterteilung: **20.04.2011**
(21) Anmeldenummer: 06791851.6
(22) Anmeldetag: 06.09.2006
(51) Int. Cl.: B23F 21/12, B23F 19/10, B23F 19/00, B23F 21/16

(54) **WERKZEUGANORDNUNG FÜR DIE HERSTELLUNG EINER SCHRÄGVERZAHNUNG BEI STIRNRÄDERN**
TOOL ARRANGEMENT FOR THE PRODUCTION OF HELICAL TEETH IN GEAR WHEELS
SYSTEME D'OUTIL POUR PRODUIRE UNE DENTURE HELICOIDALE SUR DES ROUES DROITES

(30) Priorität: 13.09.2005 DE 202005014619 U
(43) Veröffentlichungstag der Anmeldung: 28.05.2008
(73) Patentinhaber: LMT Fette Werkzeugtechnik GmbH & Co. KG, 21493 Schwarzenbek (DE); LIEBHERR-VERZAHNTECHNIK GmbH, 87437 Kempten (DE)
(72) Erfinder: CARMINCKE, Wolfgang, 21379 Scharnebeck (DE); WINKEL, Oliver, 87435 Kempten (DE)
(74) Vertreter: Hauck Patent- und Rechtsanwälte
(86) Internationale Anmeldenummer: PCT/EP2006/008658
(87) Internationale Veröffentlichungsnummer: WO 2007/031219

(56) Entgegenhaltungen:
- DE-A1- 3 704 607
- DE-A1- 19 918 289
- DE-U1- 20 320 294

## Beschreibung

Die Erfindung bezieht sich auf eine Werkzeuganordnung für die Herstellung einer Schrägverzahnung bei Stirnrädern nach dem Patentanspruch,1.

Das Herstellen von Schrägverzahnungen bei Stirnrädern mit Hilfe eines Wälzfräsers ist seit langem bekannt. Es wird zumeist nach den Axialabwälzverfahren durchgeführt. Es ist auch bekannt, Schrägverzahnungen nach dem Diagonalwälzverfahren herzustellen, das heißt, der Vorschub findet sowohl in Achs- als auch in Tangentialrichtung statt. Die Zahnflanken werden nicht exakt ausgebildet, sondern durch eine endliche Zahl von Hüllschnitten facettenartig angenähert. Jeder Hüllschnitt des Hüllschnittprofils berührt das theoretische Evolventenprofil in einem Punkt, während alle übrigen Punkte vom Evolventenprofil mehr oder weniger stark abweichen. Die schuppenartige Oberflächenstruktur wird durch ein nachgeschaltetes Feinbearbeitungsverfahren, wie z.B. dem Wälzschleifen beseitigt. Das theoretisch exakte Evolventenprofil wird jedoch für eine Optimierung des Tragverhaltens und eine Minimierung der Geräuschentwicklung abgeändert. Üblich ist etwa die Erzeugung einer bestimmten Höhenballigkeit (Kopfrücknahme), um einen möglichst stoßfreien Lauf zu erreichen. Man erreicht die Höhenballigkeit bzw. Kopfrücknahme durch ein entsprechendes Profilieren der Flanken des Werkzeugs. Eine Korrektur der Flankengeometrie über die Breite der Zahnlücke, also eine bestimmte Breitenballigeit oder auch Konizität der Zahnlücke und Schieflage der Balligkeit erfolgt durch entweder dem Werkstück oder dem Werkzeug erteilte Bewegungen, die den Achsabstand zwischen Werkzeug und Zahnrad bei axialem Durchfahren der Zahnlücke ändern. Bei geradverzahnten Stirnrädern führt dieses Verfahren zum gewünschten Ergebnis. Für den Fall jedoch, dass der Achskreuzwinkel zwischen Werkstück und Werkzeug von 90 ° verschieden ist, bedingen dadurch die Eingriffsverhältnisse eine ungleiche Korrektur der entsprechenden linken oder rechten Flanken einer Zahnlücke.

DE 199 18 289 A1 zeigt eine Werkzeuganordnung für die Herstellung einer Schrägverzahnung bei Stirnrädern, wobei auf einem gemeinsamen Dorn ein Schruppwälzfräskörper und ein Schlichtwälzfräskörper in vorgegebener Drehposition relativ zueinander befestigt sind.

Aus "Pfauter-Wälzfräsen", Teil I, Verfahren, Maschinen, Werkzeuge, Anwendungstechnik, Wechselräder, Springerverlag S. 436 ist es bereits bekannt, zur Erzeugung breitenballiger Verzahnungen Wälzfräser mit in Richtung seiner Achse unterschiedlicher Zahndicke und Zahnform zu verwenden und im Diagonalverfahren zu arbeiten. Der Wälzfräser wird bei diesem Verfahren so eingestellt, dass seine größte Zahnlücke in der Mitte der Werkstückverzahnung zum Arbeiten kommt, dort also die größte Zahndicke entsteht. An beiden Enden arbeiten dickere Fräserzähne, das heißt, die Werkstückzähne werden dort dünner (Doppel-Duplex-Charakter).

.Aus DE 37 04 607 A1 ist ein Verfahren bekannt geworden, bei dem Zahnlängskorrekturen durch Abstandsänderungen ermöglicht, gleichzeitig jedoch deren nachteilige Verzerrungen vermieden werden. Bei dem bekannten Verfahren wird mit einer Schleifschnecke im kontinuierlichen Diagonalwälzverfahren gearbeitet, wobei der Eingriffswinkel der Rechts- und Linksflanken von einem Maximalwert an einem Ende der Schnecke ausgehend zum anderen Ende hin kontinuierlich abnimmt. Hierbei von Kenntnis ausgegangen, dass in jedem Bereich eine Zahnlücke - in axialer Richtung des Zahnrads gesehen - ein bestimmter axialer Bereich der Werkzeugschnecke zugeordnet ist. Da sich die Flankengeometrie der Windungen der Schnecke in axialer Richtung ändert, wird die zu erzeugende Zahnlücke über die Zahnlückenbreite von einem sich ständig ändernden Werkzeug hergestellt. Während der Wälzbewegung zwischen Werkstück und Werkzeug wird die Schnecke nicht nur axial zum Werkstück, sondern auch tangential zu diesem verschoben, so dass über die Höhe bzw. Breite des Werkstücks gesehen, der Einlaufbereich einer Zahnlücke von anderen Schneckenwindungen bearbeitet wird als der Auslaufbereich dieser Zahnlücke. Um einerseits die gewünschten Korrekturen an den Evolventenzähnen zu erreichen und andererseits die beschriebenen Verzerrungen zu vermeiden, weisen die Flanken des Schneckenganges des Schneckenwerkzeugs unterschiedliche Eingriffswinkel auf, das heißt, es ändern sich Eingriffswinkel und Zahndicke von einem Ende des Werkzeugs zum anderen, so dass in Verbindung mit einer Achsabstandskorrektur deren Verzerrungswirkung ausgeglichen wird.

Das bekannte Verfahren erfordert, das zunächst das Werkstück mit Hilfe eines Schruppfräsers vorprofiliert wird, üblicherweise nach dem Axialwälzfräsverfahren. Anschließend muss es z.B. in einer Abwälzschleif-maschine nachbearbeitet werden, um mit Hilfe der beschriebenen Schleifschnecke eine Korrektur zu erreichen. Dies ist naturgemäß mit einem erhöhten Fertigungsaufwand verbunden.

Vor oder nach dem Schlichtbearbeiten müssen die Zähne eines auf diese Weise hergestellten Zahnrades entgratet bzw. angefast werden. Hierfür sind verschiedene Verfahren bekannt geworden.

Aus DE 203 20 295 U1 ist bekannt geworden, auf derselben Werkzeugwelle wie den Wälzfräser ein Entgratfräser aufzuspannen. Der Entgratfräser gleicht einem Scheibenfräser, wobei seine Schneidzähne schraubenlinienförmig angeordnet sind und wobei der Entgratfräser mehrgängig ausgebildet ist, mit mindestens einem Zahn pro Gang. Auf diese Weise kann im kontinuierlichen Durchlauf sowohl das Wälzfräsen als auch das Entgraten stattfinden. Die Werkzeugwelle von Wälzfräsmaschinen ist bekanntlich im Raum verstellbar. Nach dem Wälzfräsprozeß wird sie so eingestellt, dass das Entgratwerkzeug durch Drehung mit der Welle nunmehr mit den Stirnkanten der Zahnnuten in Eingriff gebracht werden kann, um nach Art des Wälzfräsverfahrens nacheinander die Stirnkanten der Zahnnuten zu bearbeiten.

Der Erfindung liegt die Aufgabe zugrunde, eine Werkzeuganordnung zu schaffen; mit der mit geringfügigem Aufwand eine entgratete und angefaste Schrägverzahnung für Stirnräder hergestellt werden kann derart, dass die Verzahnung verschränkungsfrei ist.

Diese Aufgabe wird durch die Merkmale des Patentanspruchs 1 gelöst.

Die erfindungsgemäße Werkzeuganordnung ermöglicht eine verschränkungsfreie Verzahnung. Dies bedeutet, dass die Flanken der miteinander in Eingriff stehenden Zähne annähernd in der Mitte zwischen Kopf und Fuß annähernd in gleichen Bereichen bezüglich einer durch die Mitte gehenden Ebene der Zahnräder miteinander in Eingriff sind. Eine verschränkungsfreie Verzahnung mit korrigierten Zahnflanken wird mit Hilfe eines Schlichtwälzfräskörpers erhalten, dessen auf einer Schraubenlinie liegenden Zähne jeweils ein unterschiedliches Querschnittsprofil aufweisen derart, dass der Eingriffswinkel von einem Maximalwert des ersten Zahns ausgehend bis zum letzten Zahn hin kontinuierlich abnimmt und der maximale Eingriffswinkel der gegenüberliegenden Seite des ersten oder letzten Zahns mit dem minimalen Eingriffswinkel der anderen Flanke zusammenfällt und umgekehrt.

Bei der Erfindung ist erkannt worden, dass die bei einer an sich bekannten Schleifschnecke vorhandenen Verhältnisse auf einen Wälzfräser übertragen werden können. Wird der Schlichtwälzfräser entsprechend ausgelegt, kann er mit dem Schruppwälzfräser auf einem Dorn aufgespannt werden. Dadurch wird das herzustellende Zahnrad einer Aufspannung komplett auf der Werkzeugmaschine fertiggestellt.

Auch das Entgraten lässt sich auf der gleichen Maschine durchrühren, indem auf dem Dorn mindestens ein Entgratwälzfräser aufgespannt wird, wie sie aus der DE 203 20 294 bekannt geworden sind.

Nach einer Ausgestaltung der Erfindung sind Schlichtwälzkörper und Dorn einteilig geformt. Die übrigen Werkzeuge müssen daher entsprechend auf den Dorn aufgespannt werden, wobei nach einer Ausgestaltung der Erfindung Schrupp-fräskörper und die Entgratfräser mittels einer Spannmutter und eines Distanzrings auf dem Dorn fixiert sind.

Die axiale Position der Entgratfräser auf dem Dorn ist nicht vorgegeben. Vorzugsweise liegen sie zwischen Schrupp- und Schlichtwälzfräskörper.

Die Erfindung soll nachfolgend anhand von Zeichnungen näher erläutert werden.
- Figur 1: zeigt perspektivisch schematisch eine Ansicht einer Werkzeuganord- nung nach der Erfindung.
- Figur 2: zeigt einen Schnitt durch einen Teil der Werkzeuganordnung nach Figur 1.
- Figur 3: zeigt schematisch die Flankengeometrie der einzelnen Zähne des Schlichtfräsers nach der Werkzeuganordnung nach Figur 1 und 2 in der Abwicklung.
- Figur 4: zeigt zwei Zahnprofile eines erfindungsgemäß hergestellten Zahnrads in Achsrichtung gesehen.

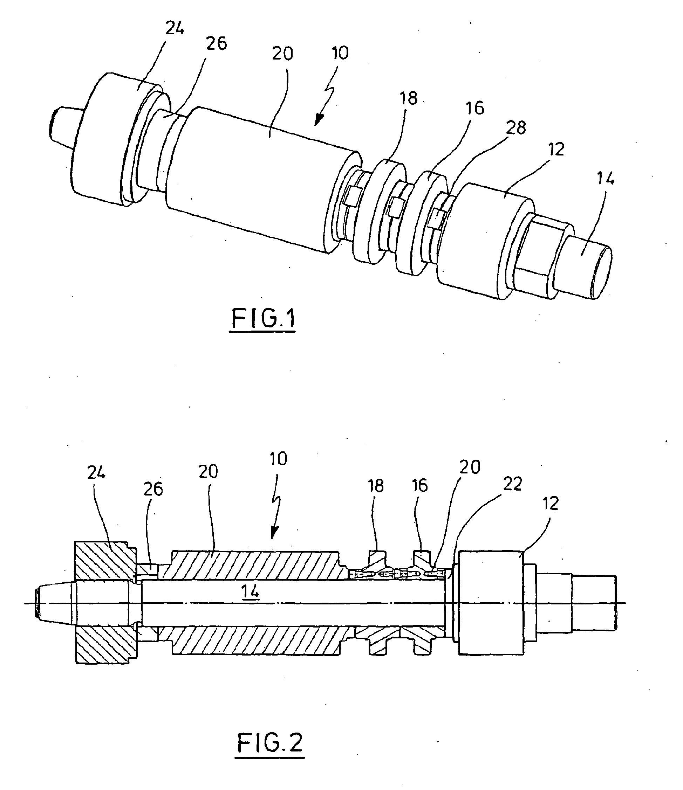

In den Figuren 1 und 2 ist eine Werkzeuganordnung 10 zur Herstellung einer Schrägverzahnung an einem Stirnrad dargestellt. Ein Schlichtwälzfräser 12 ist einteilig mit einem Dorn 14 geformt. Abschnitte des Dorns oder des Schaftes stehen zu beiden Seiten des Schlichtfräser 12 über. Auf dem Dorn 14 sind zwei Entgratfräser 16 und 18 sowie ein Schruppfräser 20 angeordnet. Sie liegen gegen einen linken Bund 22 des Schlichtfräsers 12 an und werden am anderen Ende mit Hilfe einer Spannmutter 24 über einen Distanzring 26 gegeneinander gespannt. Die gezeigten Fräser haben jeweils axiale Bünde, die in den aneinander zugekehrten Seiten eine radiale Aussparung aufweisen, in welche ein Paßstück 28 eingesetzt ist. Wie aus Figur 2 zu erkennen, sind die Paßstücke jeweils mittels einer Schraube 30 festgelegt. Auf diese Weise ist die Drehlage der einzelnen Fräser 12 bis 20 zueinander festgelegt.

Der Schruppfräser 20 sowie die Entgratfräser 14, 18 sind in bekannter Weise ausgelegt. Bezüglich der Entgratfräser wird auf DE 203 20 295 verwiesen. Sie können gemäß diesem Stand der Technik geformt sein. Der Schlichtfräser 12 weist eine spezielle Ausbildung seiner Zähne auf derart, dass das Querschnittsprofil jedes Zahns (hier nicht gezeigt) von dem vorhergehenden und nachgehenden abweicht. Auf diese Weise verändern sich die Eingriffswinkel von Zahn zu Zahn, um eine verschränkungsfreie Verzahnung zu erhalten, wie sie in Verbindung mit einem Abwälzschleifverfahren gemäß DE 37 04 607 A1 erzielt wird.

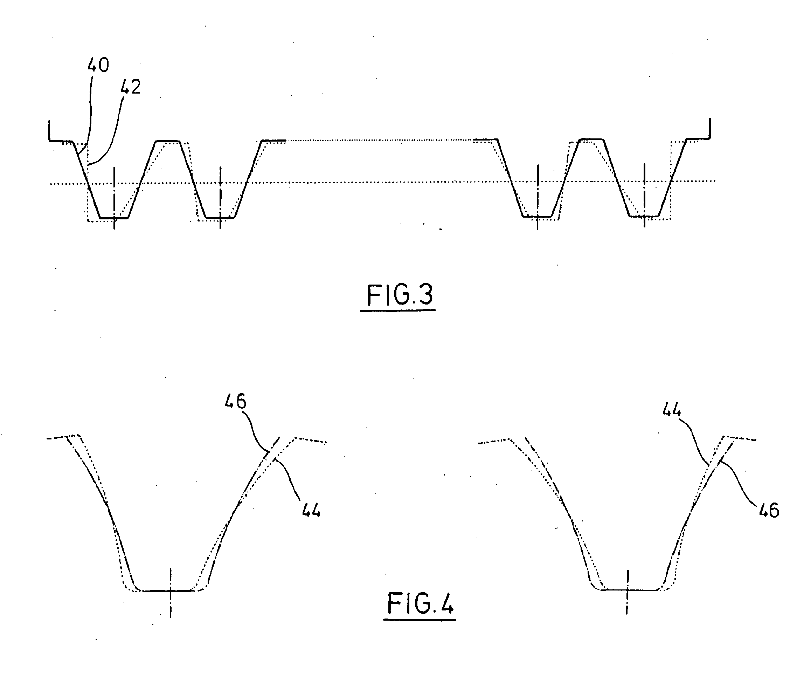

In Figur 3 ist das Profil der ersten und letzten Zähne des Schlichtfräsers, in Richtung der Schraubenlinie gesehen, dargestellt, wobei in ausgezogener Linie bei 40 die Zähne ohne Korrektur und in gestrichelten Linien bei 42 das korrigierte Zahnprofil gezeigt ist. Der im linken Bereich von Figur 3 gezeigte rechte Bereich der Zähne kommt beim Durchlaufen einer Zahnlücke von unten nach oben im unteren Bereich der Zahnlücke zum Eingriff und der in Figur 3 linke Zahnbereich kommt mit dem oberen Bereich der Zahnlücke in Eingriff. So kann der Zahn am rechten Ende von Figur 3 so profiliert sein, dass er im Fußbereich der rechten Zahnflanke mehr Material wegnimmt als im Fußbereich der linken Flanke. Dies ist in Figur 4 zu erkennen, wo wiederum die gestrichelte Linie die korrigierte Zahnflanke des Zahnrads und die durchgezogene Linie 46 die nicht korrigierte Zahnflanke bezeichnet. Im linken Bereich von Figur 3 sind die Zähne so profiliert, dass im Fußbereich der linken Flanke (siehe Figur 4) mehr Material weggenommen wird als im Fußbereich der rechten Flanke.

## Patentansprüche

1. Werkzeuganordnung für die Herstellung einer Schrägverzahnung bei Stirnrädem, wobei auf einem gemeinsamen Dorn (14) ein Schruppwälzfräskörper (20), mindestens ein Entgratfräskörper (16, 18) und ein Schlichtwälzfräskörper (12) in vorgegebener Drehposition relativ zueinander befestigt sind und die auf einer Schraubenlinie liegenden Zähne des Schlichtwälzfräskörpers (12) jeweils einen unterschiedlichen Querschnitt aufweisen derart, dass der Eingriffswinkel der Rechts- bzw. Linksflanken von einem Maximalwert des ersten Zahns ausgehend zum letzten Zahn hin kontinuierlich abnimmt und der maximale Eingriffswinkel der Rechtsflanken des ersten oder letzten Zahns mit dem minimalen Eingriffswinkel der Linksflanken zusammenfällt und umgekehrt.

2. Werkzeuganordnung nach Anspruch 1, **dadurch gekennzeichnet, dass** der Schlichtwälzfräskörper (12) einteilig mit dem Dorn (14) geformt ist.

3. Werkzeuganordnung nach Anspruch 2, **dadurch gekennzeichnet, dass** der Schruppwälzfräskörper (20) und die Entgratfräskörper (16, 18) mittels einer Spannmutter (24) und einem Distanzring (26) auf dem Dorn (14) fixiert sind.

4. Werkzeuganordnung nach Anspruch 2 oder 3, **dadurch gekennzeichnet, dass** in axialen Bunden der einzelnen Fräskörper radiale Ausnehmungen geformt sind, in die passgenaue Paßelemente (28) eingesetzt sind, die ihrerseits mittels einer achsparallelen Schraube (30) an den Wälzfräskörpern befestigt sind.

5. Werkzeuganordnung nach Anspruch 2 bis 4, **dadurch gekennzeichnet, daß** die Entgratfräskörper (16, 18) zwischen dem Schruppfräskörper (20) und dem Schlichtwälzfräskörper (12) angeordnet sind.

## Claims

1. Tool arrangement fort he production of helical gearing in gear wheels, wherein a roughing hob (20), at least one deburring cutter (16, 18) and a finishing hob (12) can be fastened on a common mandrel (14) in a predetermined rotational position relative to one another, and the teeth of the finishing hob (12), which are situated along a helical line, each have a different cross section such that the engagement angle of the right or left flanks decreases continuously starting from a maximum value of the first tooth up to the last tooth, and the maximum engagement angle of the right flanks of the first or last tooth coincides with the minimum engagement angle of the left flanks, and vice versa.

2. Tool arrangement according to claim 1, **characterized in that** the finishing hob (12) and mandrel (14) are formed in one piece.

3. Tool arrangement according to claim 2, **characterized in that** the roughing hob (20) and the deburring cutter (16, 18) are fixated on the mandrel (14) by a clamping nut (24) and a spacer ring (26).

4. Tool arrangement according to claim 2 or 3, **characterized in that** axial collars of each cutter have radial recesses in which exactly matching fitting pieces (28) are inserted, the fitting pieces each being fastened to the hobs by an axially parallel screw (30).

5. Tool arrangement according to one of the claims 2 to 4, **characterized in that** the deburring cutters (16, 18) are arranged between the roughing hob (20) and the finishing hob (12).

## Revendications

1. Système d'outil pour produire une denture hélicoïdale sur des roues droites, dans lequel un corps de fraise-mère développante d'ébauche (20), au moins un corps de fraise-mère développante d'ébarbage (16), 18) et un corps de fraise-mère développante de finition (12) sont fixés sur un mandrin (14) commun dans des positions de rotation prédéterminées par rapport de l'un à l'autre, et les dents du corps de fraise-mère développante de finition (12), situés sur une hélice, ont chacun une coupe transversale différente de sorte que l'angle de pression des flancs droits respectivement gauches décroît continument à partir d'une valeur maximale du premier dent jusqu'au dernier dent, et que l'angle de pression maximal des flancs droits du premier ou dernier dent est coïncident à l'angle de pression minimal des flancs gauches et vice versa.

2. Système d'outil selon la revendication 1, **caractérisé en ce que** le corps de fraise-mère développante de finition (12) est fait en une seule pièce avec le mandrin (14).

3. Système d'outil selon la revendication 2, **caractérisé en ce que** le corps de fraise-mère développante d'ébauche (20) et les corps de fraise-mère développante d'ébarbage (16) sont fixés sur le mandrin (14) à l'aide d'un écrou tendeur (24) et une bague d'écartement (26).

4. Système d'outil selon la revendication 2 ou 3, **caractérisé en ce que** des creux radiaux sont formés dans des embases axiales des corps de fraise individuels, dans lesquels des éléments de repère (28) sont insérés à la mesure exacte, qui sont de leur côté fixés sur les corps de fraise-mère développante à l'aide d'une vis (30) parallèle à l'axe.

5. Système d'outil selon les revendications 2 à 4, **caractérisé en ce que** les corps de fraise-mère développante d'ébarbage (16), 18) sont disposés entre le corps de fraise-mère développante d'ébauche (20) et le corps de fraise-mère développante de finition (12).
